# EUROPEAN PATENT SPECIFICATION

(11) **EP 0 609 839 B1**
(45) Date of publication and mention of the grant of the patent: **22.10.1997**
(21) Application number: 94101477.1
(22) Date of filing: 01.02.1994
(51) Int. Cl.: C25B 15/08, C25B 1/46, C01D 3/14

(54) **Method for electrolyzing an alkali metal chloride**
Verfahren zur Elektrolyse eines Alkali-Metall Chlorides
Procédé d'électrolyse d'un chlorure de métal alcalin

(30) Priority: 05.02.1993 JP 40683/93
(43) Date of publication of application: 10.08.1994
(73) Proprietor: NIPPON RENSUI CO., Chiyoda-ku, Tokyo (JP); Mitsubishi Chemical Corporation, Chiyoda-ku Tokyo (JP)
(72) Inventor: Furusho, Saburo, Kanagawa-ken (JP); Kikuchi, Takashi, Kawasaki-shi, Kanagawa-ken (JP); Tashiro, Takayuki, Tokyo (JP); Sugimoto, Ryuichi, Tokyo (JP)
(74) Representative: TER MEER STEINMEISTER & PARTNER GbR

(56) References cited:
- EP-A- 0 147 714
- US-A- 4 405 576
- CHEMICAL ABSTRACTS, vol. 89, no. 14, 2 October 1978, Columbus, Ohio, US; abstract no. 112904,
- CHEMICAL ABSTRACTS, vol. 111, no. 6, 7 August 1989, Columbus, Ohio, US; abstract no. 42332, TANAKA YOSHINAGA 'PURIFICATION OF SODIUM CHLORIDE BY RECRYSTALLIZATION'

## Description

The present invention relates to a method for electrolyzing an aqueous alkali metal chloride solution. Particularly, it relates to a method for reusing a dilute brine containing an alkali metal chloride withdrawn from an electrolytic cell in an ion exchange membrane electrolytic method, wherein sulfates as impurities remaining in the dilute brine are removed to prevent accumulation of such sulfates.

For the production of an alkali metal hydroxide, chlorine and hydrogen by electrolyzing an aqueous solution of an alkali metal chloride such as sodium chloride or potassium chloride by an ion exchange membrane system wherein raw salt of the alkali metal chloride is dissolved in water to prepare its aqueous solution i.e. brine, particularly saturated brine, it has been common to reuse dilute brine i.e. brine having a reduced concentration of the alkali metal chloride withdrawn after the electrolytic treatment in an electrolytic cell, for the preparation of such saturated brine. However, sulfates contained as impurities in the raw salt tend to remain in the dilute brine and will gradually be accumulated by repeated use of dilute brine.

Such sulfates will cause troubles such as damaging of ion exchange membranes and deterioration of the efficiency of electrolysis. Therefore, it is necessary to prevent their accumulation. As a method for this purpose, it is known to add a chemical reagent such as barium chloride or barium carbonate to the saturated brine to form insoluble barium sulfate, which can be precipitated and removed. However, such a reagent is rather expensive, and its toxicity is problematic. Further, the precipitate of barium sulfate constitutes an industrial waste. Therefore, this method has problems from both economical and practical viewpoints.

Further, a method of adsorbing and removing sulfates from dilute brine withdrawn from an electrolytic cell, by means of anion exchanger, has been proposed (Japanese Unexamined Patent Publication No. 228691/1985). However, the adsorption of sulfate ions is very little, since the concentration of chloride ions in the dilute brine is relatively high. Accordingly, it has been necessary to preliminarily dilute the dilute brine with water to a predetermined concentration before conducting the operation for the adsorption and removal of the sulfate ions. Further, the anion exchanger absorbing sulfate ions is regenerated with highly concentrated brine. Accordingly, it is necessary to recover the salt from the regeneration waste liquid. For this purpose, a further operation of concentration and cooling is required to remove sulfates from the regeneration waste liquid. Thus, this method has a problem that a very troublesome process is required for its operation.

Japanese Unexamined Patent Publication No. 55313/1992 proposes to use an ion exchange resin having polyamine groups, and Japanese Unexamined Patent Publication No. 153522/1991 proposes a method of treating brine with zirconium hydroxide. These methods utilize the difference in the selective adsorbability of the ion exchanger between chlorine ions and sulfate ions for adsorption and removal of the sulfates. However, the selective adsorbability of the ion exchanger for sulfate ions is small, since chloride ions are at a high concentration. Accordingly, it is necessary to use a large amount of the anion exchanger. Further, it is necessary to use a large amount of sodium hydroxide for desorption of absorbed sulfate ions and a large amount of hydrochloric acid for readsorption. Thus, the costs for the reagents are expensive, and such a method is economically disadvantageous. Furthermore, it is necessary to treat a large amount of the regeneration waste liquid, and it has been difficult to systemize the process, since the operation is troublesome.

As described above, conventional methods for removal of sulfates require large amounts of reagents, will produce industrial wastes, and separately require an operation for regeneration, an operation for precipitation and filtration and an operation for recovery of brine, and thus their operational management is extremely troublesome, and they are disadvantageous also from the economical viewpoint. Therefore, it has been desired to develop a method for effectively removing sulfates, which does not require a reagent involving a troublesome handling in its regeneration and which is simple in the practical operation and is economically advantageous.

The present inventors have conducted extensive studies on methods for selectively removing sulfates using various ion exchangers to establish a system for removing sulfates in an ion exchange membrane electrolytic method for an aqueous alkali metal chloride solution. As a result, they have found it possible to separate and fractionate a sulfate-containing effluent and an alkali metal chloride-containing effluent substantially free from sulfates by a chromatography technique by alternately passing the sulfate-containing brine and water through an amphoteric ion exchanger having an ion retardation function. The present invention has been accomplished on the basis of this discovery.

Thus, the present invention provides a method for electrolyzing an alkali metal chloride, which comprises supplying to an ion exchange membrane electrolytic cell, saturated brine prepared in a dissolution tank from dissolving water and an alkali metal chloride containing sulfates as impurities, electrolyzing the saturated brine in the electrolytic cell, recycling the resulting dilute brine having a reduced concentration of the alkali metal chloride, withdrawn from the electrolytic cell, to the dissolution tank, and adding dissolving water and the alkali metal chloride thereto to obtain saturated brine which is to be supplied again to the electrolytic cell, wherein at least a part of the diluted brine withdrawn from the electrolytic cell is passed through a separating column packed with an amphoteric ion exchanger having anion exchange groups and cation exchange groups, in which the anion and cation exchange groups constitute an internal salt, so that the alkali metal chloride is adsorbed on the amphoteric ion exchanger, and then dissolving water is passed through the separating column as an eluent, whereupon a fractional effluent containing mainly the sulfates, is discharged out of the recycling system, and a fractional effluent containing mainly the alkali metal chloride, is recycled to the dissolution tank.

In the accompanying drawings:

Figure 1 is a flow sheet illustrating an embodiment of the plant for carrying out the method of the present invention.

Figure 2 is a graph showing the concentrations of components and the volume of the effluents fractionated and eluted at the time of the separation of the components by a separating column in Example 1.

Figure 3 is a graph showing the concentrations of components and the volume of the effluents fractionated and eluted at the time of the separation of the components by a separating column in Example 2.

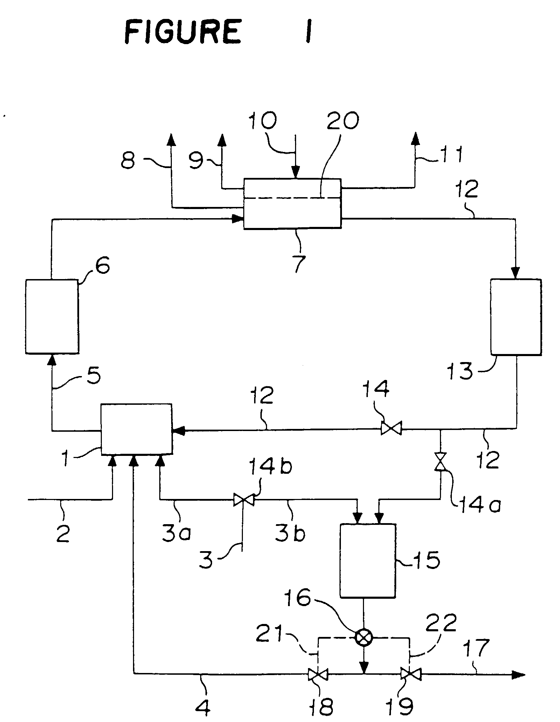

Now, the method of the present invention will be described in detail with reference to Figure 1.

Figure 1 is a flow sheet illustrating an embodiment of the plant useful for carrying out the method of the present invention. In a dissolution tank 1, highly concentrated brine (saturated brine) to be supplied to an electrolytic cell 7 is prepared by using raw salt of an alkali metal chloride containing sulfates as impurities, supplied from a supply line 2, dissolving water supplied from a conduit 3a and dilute brine recycled from the electrolytic cell through a dilute brine conduit 12.

Further, into this dissolution tank 1, an alkali metal chloride-containing fractional solution having sulfates substantially removed by a separating column 15, is introduced through a conduit 4. This fractional solution is a solution obtained by fractionating an aqueous alkali metal chloride solution having a reduced concentration of the alkali metal chloride (hereinafter referred to simply as dilute brine) withdrawn from the electrolytic cell 7 after the electrolytic treatment of the aqueous alkali metal chloride solution, so that it contains the alkali metal chloride but substantially no sulfates, by the chromatography technique according to the method of the present invention. The concentration of the alkali metal chloride in the brine is desired to be as high as possible. Therefore, it is common to prepare brine having a saturated concentration i.e. saturated brine. The saturated brine prepared in the dissolution tank 1 is sent through a conduit 5 to a refining apparatus 6, where impurities such as calcium salts, magnesium salts and strontium salts in the saturated brine, derived from the raw salt, are removed.

As the refining method, sodium carbonate and sodium hydroxide are, for example, sequentially added to precipitate calcium carbonate and magnesium hydroxide. Further, if necessary, a refining method such as chelate resin treatment, may be used in combination. Then, the saturated brine is sent to an electrolytic cell 7 of an ion exchange membrane system, where electrolysis is carried out in accordance with a conventional method. The electrolytic cell 7 is divided into an anode compartment and a cathode compartment by a diaphragm 20 made of an ion exchange membrane, so that an alkali metal hydroxide formed in the cathode compartment is withdrawn from a conduit 11, and hydrogen gas is withdrawn from a conduit 9, while chlorine gas formed in the anode compartment is withdrawn from a conduit 8, and they will be respectively recovered. By the electrolysis, about 50% of the alkali metal chloride and about 20% of water in the saturated brine will be consumed, and the remaining brine (dilute brine) is withdrawn through a conduit 12 and recycled to the dissolution tank 1. The dilute brine withdrawn from the electrolytic cell usually contains from 180 to 200 g/ℓ of the alkali metal chloride, from 6 to 12 g/ℓ of sulfates and from 1 to 4 g/ℓ of chlorates. According to the method of the present invention, such dilute brine is preferably dechlorinated in a dechlorination column (which may be referred to also as a dechlorination tower) 13, and then at least a part thereof will be supplied to the separating column (which may be referred to also as a separating tower) 15 in a predetermined amount by opening a valve 14a, if necessary, after once storing it in a storage tank (not shown). In the separating column 15, an amphoteric ion exchanger having anion exchange groups and cation exchange groups, in which the anion and cation exchange groups constitute an internal salt, is packed. The amphoteric ion exchanger constituting an internal salt is an amphoteric ion exchanger having an ion retardation function, and it may, for example, be a resin commonly called a snake-cage type. The snake-cage type resin is a composite prepared by impregnating acrylic acid to a styrene- or acrylate-type strongly basic ion exchanger, followed by polymerization, and it is commercially available under a trade name of e.g. "RETARDION 11A-8" of The Dow Chemical Co. and "DIAION SR-1" of Mitsubishi Kasei Corporation. The amphoteric ion exchanger constituting an internal salt may also be a resin having ion exchange groups of the following formula (I) directly bonded to a resin matrix composed of an acrylate- or styrene-type crosslinked copolymer: 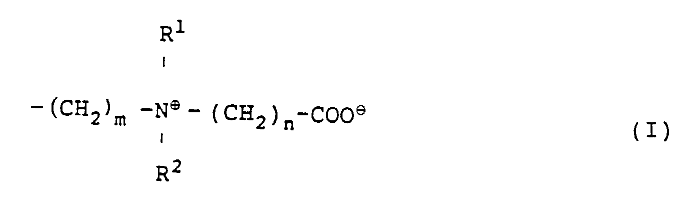 wherein each of R¹ and R² which are independent of each other, is a C₁-C₃ alkyl group, and each of m and n which are independent of each other, is a number of from 1 to 4.

The crosslinked copolymer resin matrix is preferably a resin matrix composed of a crosslinked copolymer of styrene and divinylbenzene. The amphoteric ion exchanger to be used in the present invention is preferably the one having ion exchange groups of the above formula (I) bonded to benzene rings of the resin matrix composed of the crosslinked copolymer of styrene and divinylbenzene.

In the above formula (I), each of R¹ and R² is preferably a methyl group, and each of m and n is preferably 1.

The resin having ion exchange groups of the formula (I) can be prepared, for example, by a method disclosed in Japanese Examined Patent Publication No. 45942/1985 wherein halomethyl groups are introduced to a styrene-type crosslinked copolymer, then an acid derivative of an N-substituted amino acid, such as an acid anhydride, an acid amide, an acid halide or a lower alkyl ester of N,N-dimethylglycine, is reacted thereto, followed by hydrolysis, or by a method similar thereto.

The amphoteric ion exchanger to be used in the present invention is preferably spherical particles with a particle size of from 50 to 1,500 µm, preferably from 100 to 1,200 µm, most preferably from 150 to 350 µm. The ion exchange capacity attributable to the internal salt in the amphoteric ion exchanger is usually from 1.0 to 6.0 meq/g resin, preferably from 2.0 to 4.5 meq/g resin. Further, the moisture content of the amphoteric ion exchanger is usually from 20 to 80 wt%, preferably from 30 to 60 wt%. The height of the amphoteric ion exchanger packed in the separating column 15 is usually from 1 to 4 m, although it depends on the type of the ion exchanger and the amount of the dilute brine to be treated (the capacity of the electrolytic plant). The dilute brine having dechlorinated in the dechlorination column 13, still contains a small amount of chlorates. Therefore, if the dilute brine is acidified, the chlorates will decompose to generate free chlorine, which oxidizes and deteriorates the amphoteric ion exchanger. Accordingly, it is important that the pH of the dilute brine to be supplied to the separating column 15, is maintained at a level of at least 7, preferably from 7 to 13. The amount of the dilute brine to be supplied to the separating column, is determined taking into consideration the content of sulfates in the raw salt, the allowable sulfate concentration in the saturated brine to be supplied to the electrolytic cell, etc. The sulfates in the dilute brine may not necessarily be completely removed and may be maintained at a concentration of a level not to hinder the electrolysis. It may be sufficient to remove the amount of sulfates accompanying the raw salt to be added afresh, so that further accumulation of sulfates in the saturated brine is thereby prevented. For this purpose, from 2 to 30% by volume, preferably from 4 to 20% by volume, of the brine to be recycled to the electrolytic cell, may be treated in the separating column. The amount of the dilute brine passed through the separating column 15 by one operation, is usually from 0.1 to 0.5 times by volume relative to the volume of the ion exchanger packed in the separating column. The flow rate is preferably at a space velocity (SV) of from 1 to 5 hr⁻¹. The temperature for this operation is preferably from 40 to 80°C. After passing the dilute brine in an amount for one operation, the valve 14a is closed, and the valve 14b is opened to let water from a conduit 3b pass through the separating column 15, so that firstly the sulfates are permitted to elute and flow out, and then the alkali metal chloride is permitted to elute and flow out. As such water, it is preferred to use water obtained by filtering dissolving water from the conduit 3 through a filter of about 1 µm, or soft water obtained by softening it. The amount of water for one operation is preferably from 0.2 to 1.1 times relative to the volume of the packed ion exchanger. The flow rate of water is at a space velocity (SV) of from 1 to 5 hr⁻¹, preferably at the same level as the flow rate of the above dilute brine. The temperature for this operation is from 40 to 80°C and preferably at the same level as the temperature for the passing operation of the above dilute brine. The passing directions of the dilute brine and the dissolving water may be upward or downward in the case where the ion exchanger is packed to completely fill the interior of the separating column 15. In a case where the ion exchanger is packed to have spaces or vacant portions, the passing directions should be downward, and the passing operation should be conducted with care not to let the packed ion exchanger flow. The change in the concentration of the components in the effluent from the separating column 15 is detected by a detector consisting of an electric conductivity meter or a refractometer and transmitted to valves 18 and 19 by transmission lines 21 and 22, so that the fractional effluent containing mainly sulfates will be discharged out of the recycling system of the brine, while the fractional effluent containing mainly the alkali metal chloride will be recycled to the dissolution tank 1. The valve 14a is again opened to supply the dilute brine to the separating column 15, and then the operation of passing dissolving water therethrough will be repeated. In the dissolution tank 1, saturated brine is prepared by using dilute brine directly recycled through a conduit 12 without passing through the separating column and the alkali metal-containing fractional effluent from the separating column, and adding fresh raw salt, if necessary, with a further addition of dissolving water.

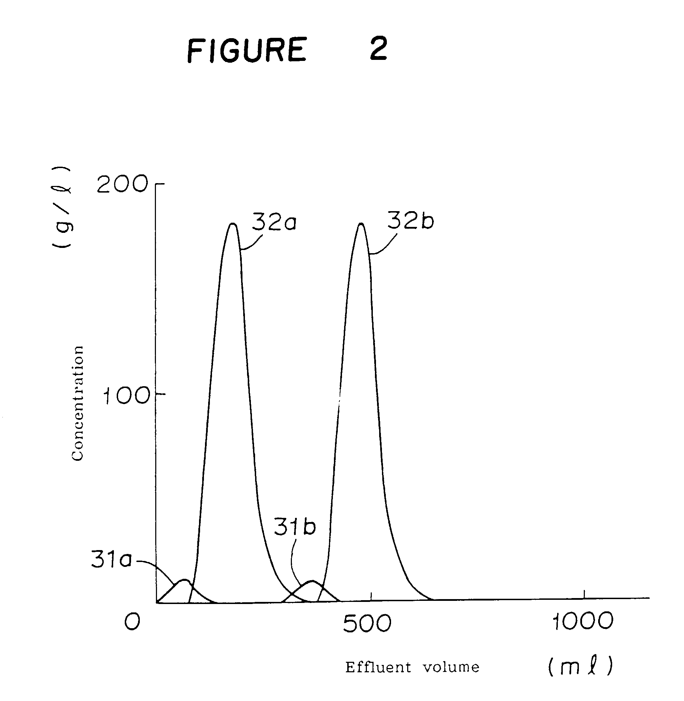

As described above, the treatment of the dilute brine in the separating column is an intermittent treatment when only one separating column is used. However, when two or more separating columns are employed, the treatment can be conducted either intermittently or continuously. If the proportion of the dilute brine to be treated in the separating column is from 2 to 30% by volume, preferably from 4 to 20% by volume, relative to the total amount of the dilute brine withdrawn from the electrolytic cell, on hourly average, it is possible to prevent accumulation of fresh sulfates. Further, since the water used for the elution of sodium chloride and sulfate from the amphoteric ion exchanger is within a range of the amount of water to be consumed in the electrolytic cell, all the amount of the fractional effluent containing mainly the alkali metal chloride, eluted from the separating column 15, may be recycled to the dissolution tank 1, whereby the amount of water to be used for electrolysis and the amount of the alkali metal chloride to be leaked out of the system, can be minimized. Further, the amount of waste water can be minimized, and thus the method is economical. According to the method of the present invention, it is unnecessary to use a barium salt with which the toxicity is problematic, no troublesome treatment of the precipitate is required, no operation for regenerating the resin or for recovering the alkali metal chloride from the regeneration waste, is required, and the sulfates can be removed in the form of an aqueous solution, whereby the handling is simple and the operational management is easy. As is evident from Figure 2, when an amphoteric ion exchanger having ion exchange groups of the above formula (I) is used, the alkali metal chloride eluted from the separating column 15 has little tailing and can be efficiently separated from the sulfates, and thus it can efficiently be recovered. Further, the amphoteric ion exchanger having ion exchange groups of the above formula (I) can be produced relatively easily as compared with the snake-cage type resin. The anion exchange groups and the cation exchange groups in the resin are the same in number, and they are mutually associated to form an internal salt. Since no excess anion or cation exchange groups are present, the separating ability is high, and the pH of the eluted effluent will not change. Thus, such an ion exchanger can be used for a long period of time under a stabilized condition.

According to the method of the present invention, even if the brine is not preliminarily diluted, chlorate ions contained in the brine will not interfere with the basic groups of the amphoteric ion exchanger to be used in the present invention, and the sulfates contained in the dilute brine withdrawn from the electrolytic cell for an aqueous alkali metal chloride solution, can efficiently be removed by a simple operation without necessity of using a special reagent. Further, sodium chloride and sodium sulfate adsorbed on the amphoteric ion exchanger can readily be eluted by water. Accordingly, the amphoteric ion exchanger can be used again for the treatment of dilute brine without necessity of subjecting it to regeneration treatment with an acid or an alkali. Further, by the method of the present invention, it is possible to establish a substantially completely closed sulfate-removal system for the alkali metal chloride electrolysis.

The method of the present invention can be carried out as described above. Now, Examples will be given for the characteristic portion of the present invention i.e. the dilute brine treatment with the amphoteric ion exchanger. However, it should be understood that the present invention is by no means restricted by such specific Examples.

The dilute brine used in the following Examples contained 195 g/ℓ of sodium chloride, 7.5 g/ℓ of sodium sulfate and 2.55 g/ℓ of sodium chlorate.

### EXAMPLE 1

As the amphoteric ion exchanger, a resin having ion exchange groups of the formula 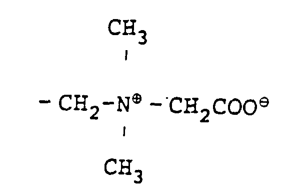 bonded to benzene rings of a styrene-divinylbenzene crosslinked copolymer, was used. The preparation of the above amphoteric ion exchanger was as follows.

Using 500 ml of demineralized water containing 0.1 wt% of polyvinyl alcohol, as a dispersion medium, 1 g of benzoyl peroxide was added as a polymerization initiator to a liquid mixture comprising 92.4 g of styrene, 3.3 g of ethylvinylbenzene and 4.3 g of divinylbenzene, and dispersion polymerization was conducted at 80°C in a nitrogen atmosphere for 10 hours.

Crosslinked copolymer particles thus obtained were dried at 120°C for 5 hours. Then, they were swelled with 100 g of tetrachloroethylene under heating and then cooled, and 200 g of chloromethyl methyl ether was added thereto. Then, 50 g of anhydrous zinc chloride was added thereto, and the mixture was reacted at 50°C for 5 hours. Then, the reaction mixture was poured into 2.5 ℓ of cool water to decompose excess chloromethyl methyl ether, followed by filtration and washing with water.

40 g of the chloromethylated resin particles (chlorine content: 22%) thus obtained and 100 g of benzene were charged into a four-necked flask equipped with a stirrer, a thermometer, a reflux condenser and a dropping funnel. From the dropping funnel, 55 g of N,N-dimethylglycine methyl ester was gradually dropwise added, while maintaining the temperature at a level of not higher than 50°C. After completion of the dropwise addition, the reaction was conducted further at 60°C for 4 hours. After completion of the reaction, the resin was collected by filtration and washed with 100 ml of acetone. Then, this resin was subjected to hydrolysis in 300 ml of a 5N sodium hydroxide aqueous solution at 80°C for 8 hours. Then, the resin was collected by filtration, washed with water. The obtained resin had an average particle size of 280 µm.

The amount of the internal salt of the resin was 2.17 meq/g-resin, and the moisture content was 40%. The proportions of the quaternary ammonium groups and the carboxyl groups were equal as measured by sodium chloride and hydrochloric acid, and thus they were found to be present equally. The amount of the internal salt formed was determined by measuring 5 ml of the resin, removing water by centrifugal separation, immersing the resin in 250 ml of 0.2 N hydrochloric acid, followed by titration, whereupon hydrochloric acid consumed by the titration was measured, and the amount of the internal salt was calculated therefrom.

The separating column was a column having an inner diameter of 25 mm and equipped with a jacket, and 500 ml of the above amphoteric ion exchange resin was packed therein to form a packed layer for chromatography separation having a depth of 1020 mm.

Through this packed layer, 100 ml of dilute brine having the above mentioned composition was passed downward at a space velocity (SV) of 3 hr⁻¹ (amount: 0.2 times by volume/volume of the resin) at a temperature of 40°C. Then, 200 ml of soft water (0.4 times by volume/volume of the resin) was passed under the same conditions as for the above dilute brine.

Then, passing of dilute brine and then soft water was repeated under the same conditions as above.

The relation between the effluent volume and the concentrations of sodium chloride and sodium sulfates in the effluents from the separation column, was as shown in Figure 2. In the Figure, the curves 31a and 31b represent sodium sulfate, and the curves 32a and 32b represent sodium chloride. Thus, it was possible to readily fractionate a sodium chloride solution containing substantially no sulfates.

### EXAMPLE 2

500 ml of a snake-cage type amphoteric ion exchange resin DIAION SR-1 (manufactured by Mitsubishi Kasei Corporation) adequately swelled with deionized water, was packed in the same separating column as used in Example 1 to form a packed layer of chromatography separation having a depth of 1020 mm. The resin had an average particle size of 224 µm, a total ion exchange capacity of 3.74 meq/g (of which, the amount of the internal salt formed was 3.09 meq/g) and a water content of 41%.

Through this packed layer, 100 ml of dilute brine having the same composition as in Example 1 was passed downward at a space velocity (SV) of 3 hr⁻¹ (amount: 0.2 times by volume/volume of the resin) at a temperature of 40°C. Then, 400 ml of soft water (0.8 times by volume/volume of the resin) was passed under the same conditions as for the above dilute brine.

Then, passing of dilute brine and then soft water, was repeated under the same conditions as above.

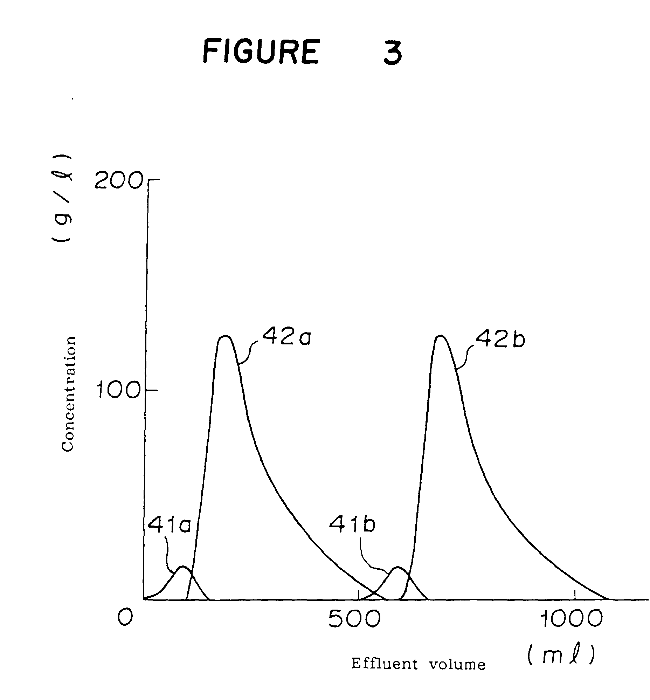

The relation between the effluent volume and the concentrations of sodium chloride and sodium sulfate in the effluents from the separating column, was as shown in Figure 3. In the Figure, the curves of 41a and 41b represent sodium sulfates and the curves 42a and 42b represent sodium chloride. Thus, it was readily possible to fractionate a sodium chloride solution containing no substantial sulfates.

## Claims

1. A method for electrolyzing an alkali metal chloride, which comprises supplying to an ion exchange membrane electrolytic cell, saturated brine prepared in a dissolution tank from dissolving water and an alkali metal chloride containing sulfates as impurities, electrolyzing the saturated brine in the electrolytic cell, recycling the resulting dilute brine having a reduced concentration of the alkali metal chloride, withdrawn from the electrolytic cell, to the dissolution tank, and adding dissolving water and the alkali metal chloride thereto to obtain saturated brine which is to be supplied again to the electrolytic cell, wherein at least a part of the diluted brine withdrawn from the electrolytic cell is passed through a separating column packed with an amphoteric ion exchanger having anion exchange groups and cation exchange groups, in which the anion and cation exchange groups constitute an internal salt, so that the alkali metal chloride is adsorbed on the amphoteric ion exchanger, and then dissolving water is passed through the separating column as an eluent, whereupon a fractional effluent containing mainly the sulfates, is discharged out of the recycling system, and a fractional effluent containing mainly the alkali metal chloride, is recycled to the dissolution tank.

2. The method according to Claim 1, wherein the amphoteric ion exchanger is a snake-cage type amphoteric ion exchanger, or an amphoteric ion exchanger having ion exchange groups of the following formula (I) bonded to a crosslinked copolymer resin matrix: 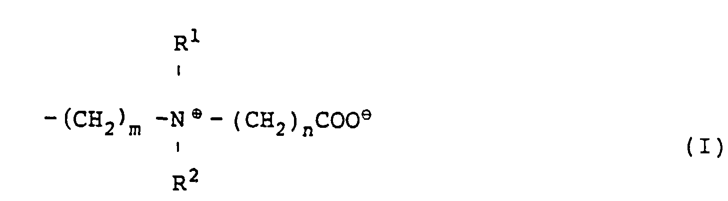 wherein each of R¹ and R² which are independent of each other, is a C₁-C₃ alkyl group, and each of m and n which are independent of each other, is a number of from 1 to 4.

3. The method according to Claim 1, wherein the amphoteric ion exchanger is an amphoteric ion exchanger having ion exchange groups of the following formula (I) bonded to a crosslinked copolymer resin matrix: 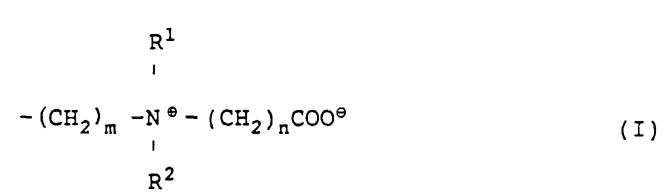 wherein each of R¹ and R² which are independent of each other, is a C₁-C₃ alkyl group, and each of m and n which are independent of each other, is a number of from 1 to 4.

4. The method according to Claim 3, wherein the crosslinked copolymer resin matrix is a resin matrix composed of a crosslinked copolymer of styrene and divinylbenzene.

5. The method according to Claim 4, wherein the amphoteric ion exchanger is an amphoteric ion exchanger having ion exchange groups of said formula (I) bonded to benzene rings of the resin matrix composed of the crosslinked copolymer of styrene and divinylbenzene.

6. The method according to any one of Claims 2 to 5, wherein in the formula (I), each of R¹ and R² is a methyl group, and each of m and n is 1.

7. The method according to any one of Claims 1 to 6, wherein the proportion of the dilute brine to be treated in the separating column is from 2 to 30% by volume of the total amount of the dilute brine withdrawn from the electrolytic cell, on hourly average.

8. The method according to any one of Claims 1 to 6, wherein the dilute brine withdrawn from the electrolytic cell is dechlorinated and then adjusted to pH 7 to 13, before being passed through the separating column.

9. The method according to any one of Claims 1 to 6, wherein the amount of the dilute brine per one operation of passing through the separating column is from 0.1 to 0.5 times by volume relative to the volume of the ion exchanger packed in the separating column, and the flow rate of the dilute brine is at a space velocity of from 1 to 5 hr⁻¹.

## Patentansprüche

1. Verfahren zur Elektrolyse eines Alkalimetallchlorids, umfassend das Zuführen zu einer Elektrolysierzelle mit einer Ionenaustauschermembran einer konzentrierten Salzlösung, die in einem Auflösungstank aus Auflösungswasser und einem Sulfate als Verunreinigungen enthaltenden Alkalimetallchlorid hergestellt worden ist, Elektrolysieren der gesättigten Salzlösung in der Elektrolysierzelle, Rückführen der resultierenden, verdünnten Salzlösung mit einer verringerten Konzentration des Alkalimetallchlorids, die aus der Elektrolysierzelle abgezogen worden ist, zu dem Auflösungstank und Zugeben von Auflösungswasser und des Alkalimetallchlorids hierzu, um eine gesättigte Salzlösung zu erhalten, welche erneut der Elektrolysierzelle zuzuführen ist, wobei mindestens ein Teil der aus der Elektrolysierzelle abgezogenen, verdünnten Salzlösung durch eine Trennsäule geführt wird, die mit einem amphoteren Ionenaustauscher mit Anionenaustauschgruppen und Kationenaustauschgruppen gepackt ist, worin die Anionen- und Kationenaustauschgruppen ein inneres Salz darstellen, so daß das Alkalimetallchlorid auf dem amphoteren Ionenaustauscher adsorbiert wird, und danach Auflösungswasser durch die Trennsäule als Eluent geführt wird, woraufhin ein fraktionierter Ausfluß, welcher hauptsächlich die Sulfate enthält, aus dem Rückführsystem abgezogen wird, und ein fraktionierter Ausfluß, der hauptsächlich das Alkalimetallchlorid enthält, zu dem Auflösungstank rückgeführt wird.

2. Verfahren nach Anspruch 1, wobei der amphotere Ionenaustauscher ein amphoterer Ionenaustauscher vom Schlangen-Käfig-Typ oder ein amphoterer Ionenaustauscher mit Ionenaustauschgruppen der folgenden Formel (I), die an eine vernetzte Copolymerharz-Matrix gebunden sind, ist: 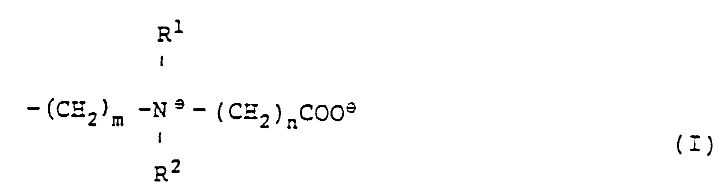 worin jedes von R¹ und R², welche voneinander unabhängig sind, eine C₁-C₃-Alkylgruppe ist und jedes von m und n, welche voneinander unabhängig sind, eine Zahl von 1 bis 4 ist.

3. Verfahren nach Anspruch 1, wobei der amphotere Ionenaustauscher ein amphoterer Ionenaustauscher mit Ionenaustauschgruppen der folgenden Formel (I), die an eine vernetzte Copolymerharz-Matrix gebunden sind, ist: 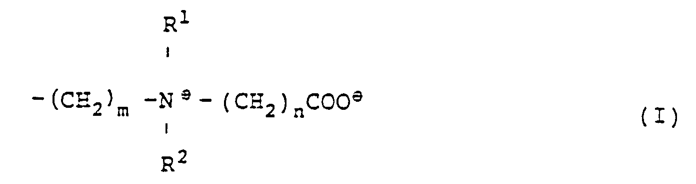 worin jedes von R¹ und R², welche voneinander unabhängig sind, eine C₁-C₃-Alkylgruppe ist, und jedes von m und n, welche voneinander unabhängig sind, eine Zahl von 1 bis 4 ist.

4. Verfahren nach Anspruch 3, wobei die vernetzte Copolymerharz-Matrix eine aus einem vernetzten Copolymer aus Styrol und Divinylbenzol aufgebaute Harzmatrix ist.

5. Verfahren nach Anspruch 4, wobei der amphotere Ionenaustauscher ein amphoterer Ionenaustauscher mit Ionenaustauschgruppen der Formel (I), die an Benzolringe der aus dem vernetzten Copolymer aus Styrol und Divinylbenzol aufgebauten Harzmatrix gebunden sind, ist.

6. Verfahren nach mindestens einem der Ansprüche 2 bis 5, wobei in der Formel (I) jedes von R¹ und R² eine Methylgruppe ist, und jedes von m und n 1 ist.

7. Verfahren nach mindestens einem der Ansprüche 1 bis 6, wobei der Anteil der in der Trennsäule zu behandelnden, verdünnten Salzlösung im Stundendurchschnitt 2 bis 30 Vol.-% der Gesamtmenge der aus der Elektrolysierzelle abgezogenen, verdünnten Salzlösung ist.

8. Verfahren nach mindestens einem der Ansprüche 1 bis 6, wobei die aus der Elektrolysierzelle abgezogene, verdünnte Salzlösung entchlort und dann aufpH 7 bis 13 eingestellt wird, bevor sie durch die Trennsäule geführt wird.

9. Verfahren nach mindestens einem der Ansprüche 1 bis 6, wobei die Menge der verdünnten Salzlösung pro einem Betrieb des Durchführens durch die Trennsäule das 0,1 bis 0,5 volumenfache bezüglich des Volumens des in der Trennsäule gepackten Ionenaustauschers beträgt, und die Strömungsrate der verdünnten Salzlösung bei einer Raumgeschwindigkeit von 1 bis 5 h⁻¹ liegt.

## Revendications

1. Procédé d'électrolyse d'un chlorure de métal alcalin, qui comprend les opérations consistant à :
- adresser à une cellule électrolytique à membrane échangeuse d'ions, de la saumure saturée préparée dans un réservoir de dissolution à partir d'eau de dissolution et d'un chlorure de métal alcalin contenant des sulfates comme impuretés ;
- électrolyser la saumure saturée dans la cellule électrolytique ;
- recycler la saumure diluée résultante ayant une concentration réduite en chlorure de métal alcalin, retirée de la cellule électrolytique, dans le réservoir de dissolution, et ;
- y ajouter de l'eau de dissolution et le chlorure de métal alcalin, afin d'obtenir de la saumure saturée qui doit être adressée à nouveau à la cellule électrolytique,
procédé dans lequel au moins une partie de la saumure diluée, retirée de la cellule électrolytique, est amenée à passer à travers une colonne de séparation, garnie d'un échangeur d'ions amphotère ayant des groupes d'échange d'anions et des groupes d'échange de cations, dans lequel les groupes d'échange d'anions et de cations constituent un sel interne, de telle sorte que le chlorure de métal alcalin est adsorbé sur l'échangeur d'ions amphotère, puis de l'eau de dissolution est amenée à passer à travers la colonne de séparation en tant qu'éluant, sur quoi un effluent fractionnaire, contenant principalement les sulfates, est déchargé du système de recyclage, et un effluent fractionnaire, contenant principalement le chlorure de métal alcalin, est recyclé au réservoir de dissolution.

2. Procédé selon la revendication 1, dans lequel l'échangeur d'ions amphotère est un échangeur d'ions amphotère de type cage à serpent, ou un échangeur d'ions amphotère ayant des groupes d'échange d'ions de formule suivante (I) liés à une matrice de résine de copolymère réticulé : 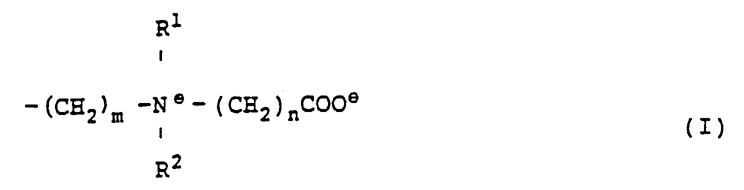 dans laquelle :
- R¹ et R², qui sont indépendants l'un de l'autre, représentent chacun un groupe alkyle en C₁-C₃ ; et
- m et n, qui sont indépendants l'un de l'autre, représentent chacun un nombre de 1 à 4.

3. Procédé selon la revendication 1, dans lequel l'échangeur d'ions amphotère est un échangeur d'ions amphotère ayant des groupes d'échange d'ions de formule suivante (I) liés à une matrice de résine de copolymère réticulé : 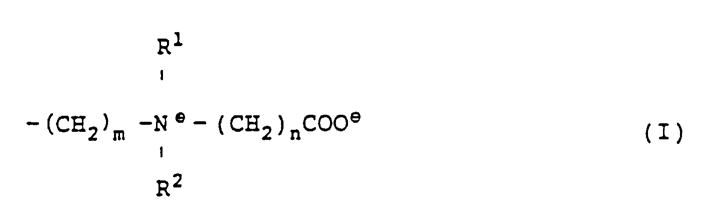 dans laquelle :
- R¹ et R², qui sont indépendants l'un de l'autre, représentent chacun un groupe alkyle en C₁-C₃ ; et
- m et n, qui sont indépendants l'un de l'autre, représentent chacun un nombre de 1 à 4.

4. Procédé selon la revendication 3, dans lequel la matrice de résine de copolymère réticulé est une matrice de résine composée d'un copolymère réticulé de styrène et de divinylbenzène.

5. Procédé selon la revendication 4, dans lequel l'échangeur d'ions amphotère est un échangeur d'ions amphotère ayant des groupes d'échange d'ions de ladite formule (I) liés à des noyaux benzéniques de la matrice de résine composée du copolymère réticulé de styrène et de divinylbenzène.

6. Procédé selon l'une des revendications 2 à 5, dans lequel, dans la formule (I), R¹ et R² représentent chacun un groupe méthyle, et m et n représentent chacun 1.

7. Procédé selon l'une des revendications 1 à 6, dans lequel la proportion de la saumure diluée devant être traitée dans la colonne de séparation est de 2 à 30% en volume de la quantité totale de la saumure diluée retirée de la cellule électrolytique, sur une moyenne horaire.

8. Procédé selon l'une des revendications 1 à 6, dans lequel la saumure diluée, retirée de la cellule électrolytique, est déchlorée, puis ajustée à pH 7 à 13, avant d'être amenée à passer à travers la colonne de séparation.

9. Procédé selon l'une des revendications 1 à 6, dans lequel la quantité de la saumure diluée pour une opération de passage à travers la colonne de séparation est de 0,1 à 0,5 fois en volume par rapport au volume de l'échangeur d'ions introduit comme garnissage dans la colonne de séparation, et le débit de la saumure diluée correspond à une vitesse spatiale de 1 à 5 h⁻¹.
